Europäisches Patentamt

European Patent Office

Office européen des brevets

(19)

(11) Publication number: **0 137 588**
**B1**

(12) **EUROPEAN PATENT SPECIFICATION**

(45) Date of publication of patent specification: **10.02.88**

(51) Int. Cl.⁴: **B 29 C 49/24**

(21) Application number: **84304540.2**

(22) Date of filing: **03.07.84**

(54) In-mold Labeler.

(30) Priority: **19.07.83 US 515248**
**01.03.84 US 585077**

(43) Date of publication of application:
**17.04.85 Bulletin 85/16**

(45) Publication of the grant of the patent:
**10.02.88 Bulletin 88/06**

(84) Designated Contracting States:
**AT BE CH DE FR GB IT LI LU NL SE**

(56) References cited:
**DE-B-1 778 732**
**US-A-4 355 967**
**US-A-4 359 314**
**US-A-4 368 018**

(73) Proprietor: **CONTINENTAL PLASTIC
CONTAINERS, INC.**
**51 Harbor Plaza**
**Stamford Connecticut 06904 (US)**

(72) Inventor: **Bartimes, George Francis**
**1621 Touhy Avenue**
**Chicago Illinois 60626 (US)**
Inventor: **Avery, John Lawrence**
**302 Briar Branch Terrace**
**Matteson Illinois 60443 (US)**
Inventor: **Blomquist, Leonard August**
**1415 Burger Avenue**
**Joliet Illinois 60431 (US)**
Inventor: **McDonald, Stephen Brice**
**1800 Reservoir Road Lot 154**
**Lima Ohio 45801 (US)**

(74) Representative: **Hallam, Arnold Vincent et al**
**E.N. LEWIS & TAYLOR 144 New Walk**
**Leicester LE1 7JA (GB)**

# Description

This invention relates in general to new and useful improvements in applying labels into mold halves of blow molding machines wherein, prior to the blow molding of a preform in a closed mold formed of two mold halves, a label is placed in one or both mold halves. Most particularly, this invention relates to a label applying device of the type basically disclosed, but materially different from, those illustrated and described in U.S. patent Nos. 4,355,967 and 4,359,314, granted to Ernest W. Hellmer on October 26, 1982 and November 16, 1982, respectively.

US—A—4 368 018 discloses an injection molding machine in which one of two relatively movable platens carries a housing in which a cylindrical cam with a generally helicoidal groove is rotatably lodged. The cam is rigid with a shaft disposed parallel to the direction of platen motion. A cam follower on the inner surface of that housing engages in the helicoidal groove whereby the shaft is rotated during relative reciprocation of the platens; a hub idling on the opposite shaft end, supported by a control box on the other platen, can be positively coupled to the shaft by a clutch in this box so as to rotate therewith. An elbow coupled with that hub, directly or through a carriage having a· rack in mesh with a gear fixed to the hub, supports a pick-up head which in the engaged state of the clutch enters between two separated mold portions respectively carried by the platens for extracting a freshly molded workpiece from the mold or, possibly, placing an externally supplied insert in an empty mold cavity.

This invention relates particularly to the application of a label or labels into mold halves of molds which move in a generally circular path and which open and close in a radial direction and wherein, after each mold unit has opened and the previously molded article is removed therefrom, a label or labels is or are applied to one or both mold halves by a mechanism which may be positioned between the open mold halves. The mechanism will pick up a label from a horizontally disposed label stack, rotate the label on the order of 90° into alignment with the open mold half and then, in properly timed relation with the movement of the mold half, apply the label thereto.

The present invention seeks to provide an improved form of in-mold labeler.

Accordingly the present invention provides a label applicator for transferring a label from a generally horizontal label stack into a generally vertically opening mold, said label applicator comprising an extensible fluid cylinder having a piston rod and a label pick-up head carried by said piston rod for selected projecting and retraction; characterised in that there is provided a horizontal shaft, support means mounting said shaft for rotation about its axis, a mounting bracket carried by said shaft for rotation therewith, said mounting bracket carrying said fluid cylinder with said fluid cylinder having an axis generally normal to the axis of said shaft, and a motor for oscillating said shaft to first present said label pick-up head to a label stack to pick up a label and then by rotating said shaft to then present said label pick-up head to a mold half to position a label in said mold half.

A preferred form of label applicator according to this invention includes a rotary actuator constructed to oscillate between two terminal positions through a preselected arc on the order of 90°, the actuator having a shaft which is coupled to a mounting bracket for an extensible fluid motor, which, in turn, carries a suction head for picking up, carrying and discharging the labels.

There may be interposed between the rotary actuator and the mounting bracket a decelerator which will permit rapid movement of the rotary actuator but will dampen the stopping thereof in a manner so as not to apply an undesirable impact force on a label which would release the label from the carrier therefor.

It has been found that an air cylinder having a 9 mm (3/4 inch) bore will provide sufficient force at $0.7 \times 10^{-3}$ Pascals (100 p.s.i.) to effect the desired oscillation of the shaft and the label pick-up mechanism carried thereby. This small bore air cylinder having a 76 mm (three inch) stroke, when coupled to the shaft by a lever arm providing the necessary force multiplication factor, provides the adequate drive while occupying much less than the identified 76 mm (three inches) previously required space so as to permit the mounting of two such air motors in side-by-side relation.

The present invention is further described hereinafter, by way of example, with reference to the accompanying drawings, in which:

Figure 1 as an elevational view with parts broken away and shown in section of the label applicator in position awaiting a mold half to become aligned therewith.

Figure 2 is a transverse sectional view taken through the mold half from the left in Figure 1, showing the label applicator in elevation and showing in phantom lines the label applicator in position for picking up labels.

Figures 3A—3G are schematic views showing the general operation of the label applicator.

Figure 4 is a flow diagram showing the various actuations of components of the label applicator and a molding machine.

Figure 5 is a schematic elevational view with parts out of phase showing the manner in which two label magazines and two label transfer units using extensible fluid motors may be mounted for applying labels to radially inner and outer halves of a radially split blow mold.

Figure 6 is an elevational view of the label transfer apparatus as viewed from the right of Figure 5, with parts broken away and the outer mold half shown in transverse section.

Figure 7 is a side elevational view, taken generally along the line 7—7 of Figure 5, of the mounting of the label transfer apparatus utilizing the air cylinder.

Figure 8 is a sectional view, taken generally along the line 8—8 of Figure 7, showing the specific details of the modified label transfer apparatus.

Figure 9 is an enlarged fragmentary sectional view taken substantially along the line 9—9 of Figure 7, and shows further the details of the label transfer apparatus.

As set forth above, this invention relates to a label applicator which is particularly constructed for applying in an open blow mold half cavity a label. It is to be understood that each blow mold half is one-half of a blow mold unit which rotates in a generally circular path and which closes on a preform and, as the closed mold unit rotates, the preform therewithin is blow molded to the configuration of the mold unit cavity and at the same time incorporates therein on the outer surface thereof a label which was previously placed within the blow mold cavity. In a preselected part of the rotational path of the blow mold unit, after the article has been blow molded therein and has cooled sufficiently for removal from the blow mold unit, the two halves of the blow mold unit separate in a radial direction and the blow molded article is discharged therefrom. At this time the blow mold halves are sufficiently radially spaced to pass radially inwardly and radially outwardly of a label applicator. This invention particularly relates to the label applicator and the label applicator has been illustrated in position relative to the inner mold half only of a twin cavity mold half.

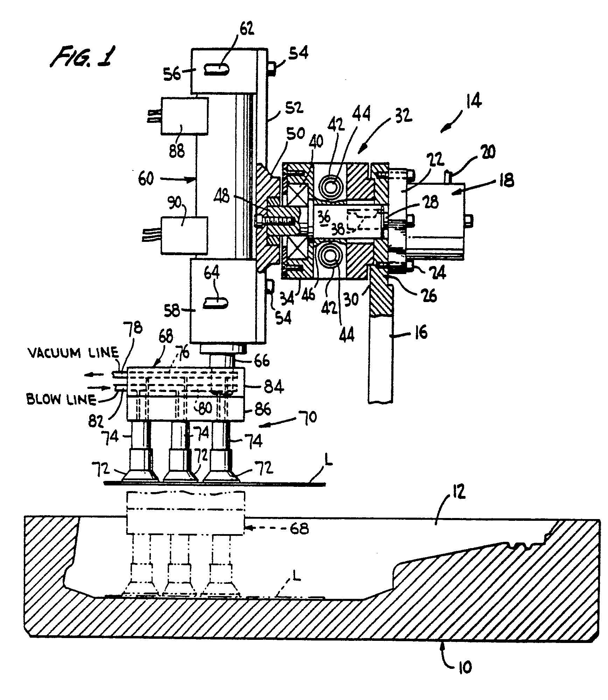

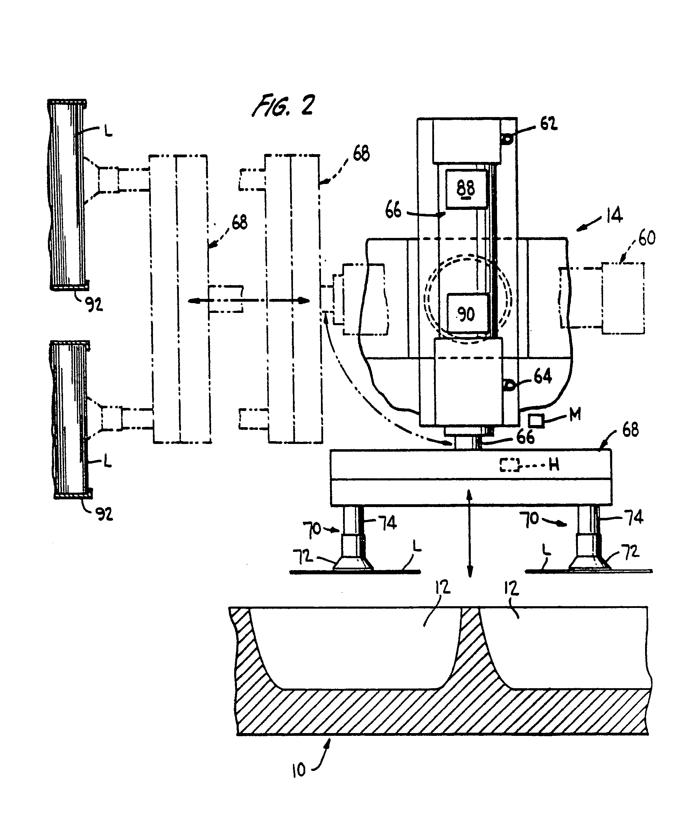

Referring now to Figure 1, it will be seen that a typical radially inner mold half is generally identified by the numeral 10, the mold half 10 being only schematically illustrated and being provided with twin cavities 12 (Figure 2).

The label applicator, which is generally identified by the numeral 14, includes a mounting plate 16 which is fixedly secured to frame portions (not shown) of a blow molding machine. The label applicator 14 includes a rotary actuator 18 which is of the fluid driven type and is provided with suitable fluid lines 20 which lead to flow control valves (not shown) which do not in and of themselves form part of the invention.

The rotary actuator 18 includes a mounting flange 22 which is secured by means of fasteners 24 to one face 26 of the mounting plate 16. The rotary actuator 18 is provided with an output shaft 28 which, in accordance with the construction of the rotary actuator, oscillates through a predetermined arc between first and second stationary positions whereat the shaft 28 is held by fluid pressure. In accordance with this invention, the rotary actuator 18 rotates through an arc on the order of 90°. The position of the actuator 18 is sensed by a sensor H mounted on the mounting plate 16 when the label applicator 14 is rotated to the label pick-up position and by a sensor M mounted on the mounting plate 16 when the label applicator 14 is rotated to the label place position, as will be discussed in more detail hereinafter.

In order to facilitate rapid deceleration of the rotation of the output shaft 28, there is mounted on the opposite face 30 of the mounting plate 16 a decelerator generally identified by the numeral 32. The decelerator 32 includes a housing 34 which is secured to the mounting plate 16 by way of other fasteners (not shown). The decelerator 32 includes a shaft 36 which has one end thereof, in the illustrated embodiment of the decelerator 32, telescoped over the output shaft 28 and locked thereto by means of a key and key slot arrangement 38.

The opposite end of the shaft 36 is mounted within a bearing 40 carried by the housing 34 and for rotation with respect to the housing 34.

The central portion of the decelerator 32 includes two decelerator units 42 which may be of the spring or fluid type. The two decelerator units 42 have active faces 44 facing in the same direction. The central portion of the shaft 36 is provided with a double faced stop member or flag 46 which is fixedly attached to the shaft 36. In one direction of rotation of the shaft 36, the stop member 46 will have one face thereof engage the operative face 44 of one decelerator unit 42 to slow the rotation of the shaft 36 as it approaches one of its fixed positions. The other face of the stop member 46 will be in angularly spaced relation with respect to the one face such that when the shaft 36 approaches the other of its two positions, the other face of the stop member 46 will engage the operative face 44 of the respective decelerator unit 42 to slow the rotation of the shaft 36 as it approaches its other fixed position.

As will be described hereinafter, a label to be transferred to a blow mold half cavity will be carried by a suction head, and the purpose of the decelerator unit 32 is to permit rapid rotation of the label applicator while slowing the stopping of the label applicator at a controlled rate such that the label carried by the suction head will not be displaced relative thereto.

The shaft 36 has a free end 48 which extends from the housing 34 and which has mounted thereon a hub 50 of a mounting bracket 52. The mounting bracket 52 includes a mounting plate to which there is secured by fasteners 54 end caps 56, 58 of a conventional extensible fluid motor 60. The fluid motor 60 is provided with fluid lines 62, 64 which will be connected to conventional valving (not shown). The fluid motor 60 is provided with a cylinder rod or piston rod 66 which, in turn, carries a support head 68. The support head 68, in turn, carries a suction head 70 which, in the illustrated embodiment of the invention, includes three suction cups 72 each connected to the support head 68 by suction cup stems 74.

At this time it is pointed out that when the blow mold half 10 is of the twin cavity type, as shown in Figure 2, the support 68 will carry twin suction head 70.

It is to be understood that the support head 68 will be provided with a vacuum manifold 76 to which there is coupled a vacuum line 78 and a blow air manifold 80 to which there is connected a blow line 82.

It is also to be noted that the support head 68 is formed of two parts 84, 86 which are coupled together with breakaway coupling means (not shown) which will permit the support head to be of a breakaway type in the event of mistiming of the actuation of the label applicator 14 with respect to the position of a blow mold half such as the blow mold half 10.

The fluid motor 60 carries electrical sensors 88, 90 which will sense the position of the piston rod 66. Most specifically, the sensor 88 will sense the retraction of the piston rod 66 while the sensor 90 will sense the extension of the piston rod 66. These sensors, in turn, control actuation of other components of the label applicator as will be described in more detail hereinafter.

Referring now to Figure 2, it will be seen that when the mold half 10 is of the twin cavity type, there will be two horizontal stacks of labels L, one stack for each of the two cavities 12. Each stack of labels L will be mounted within a suitable stack unit 92 and each stack of labels will be urged to the right, as shown in Figure 2, by spring means (not shown) so that there will always be a label L at the front face of each stack unit.

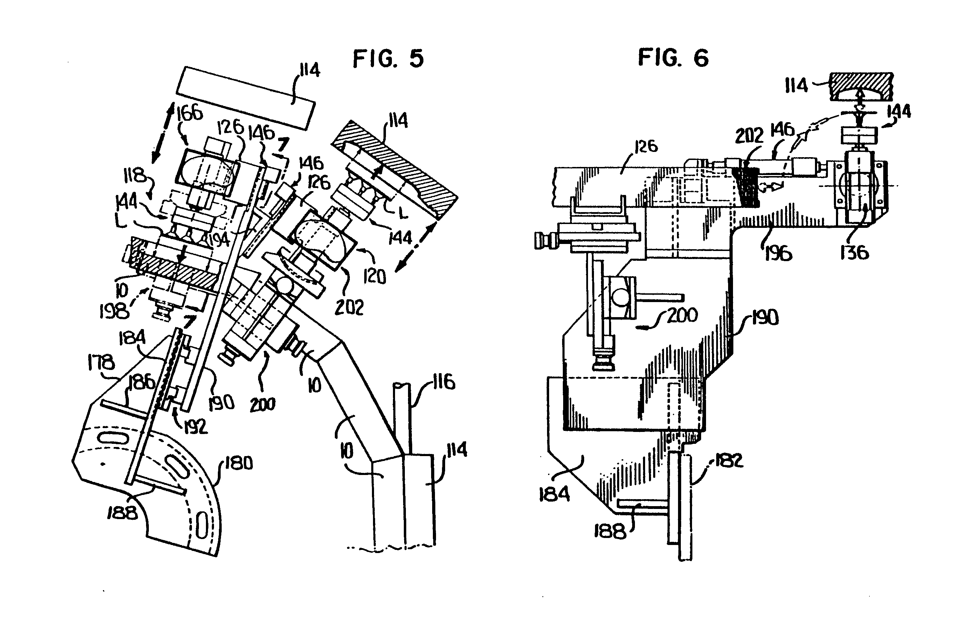

The timing sequence of the operation of the label applicator 14 is shown in Figure 4. It is to be understood that associated with each mold unit are control targets which control these operation of the label applicator. A first of these control units is an ITD control in the form of a timer which controls the retraction of the extensible fluid motor 60 at the label stack or magazine.

The second illustrated control is a sensor H which is located at the magazine and which senses when the label applicator 14 has been rotated to the label pick-up position. Only when the sensor H has been actuated can the extensible fluid motor 60 be actuated at the magazine to pick up a label or labels to be applied.

The next identified control is the sensor M which is actuated when the label applicator 14 has been rotated to its label place position. Only during this time frame can the fluid motor 60 be actuated to place a label within an associated mold.

The next control, which is identified as OK TO LABEL control, is controlled by the position of the approaching mold and provides a relatively large time frame which starts at the same time as the beginning of the sensor M time frame, but terminates prior thereto.

The next control is a MOLD SAFETY—8 sensor type control which more closely restricts the time frame during which a label may be placed within a mold and has an end corresponding to the end of the time frame for the OK TO LABEL control.

Next, there is provided a labeler time TD3 which provides a very restricted time frame within which the fluid motor 60 may be extended to place a label within the mold.

Finally, there is a VACUUM/BLOW TIMER TD4 which controls the time during which blow air is directed to the suction head 70 to discharge a label from the suction head 70.

It is to be understood that the fluid motor 60 can be extended only when the label applicator 14 is in its proper rotated position relative to the magazine or in its proper rotated position with respect to the mold. It is also to be understood that the control of blow air to the suction head 70 is operable only when the sensor 90 senses the extended position of the piston rod 66 so that the blow air will not discharge a label until the label is within the mold and closely adjacent the surface thereof.

It will be seen that the timer TD4, when associated with the sensor 90, controls the operation of the blow air and that the blow air will be automatically shut off when the labeler retracts from the blow mold. It will also be seen that once the sensor 88 senses that the piston rod 66 has retracted, the rotary actuator 18 will be actuated to rotate the labeler back into alignment with the magazine and this condition will be detected by the sensor H.

It is to be understood that the MOLD SAFETY—8 control or sensor will not permit actuation of the fluid motor 60 if the rotary actuator 18 has not rotated the labeler into alignment with the mold at a predetermined time in advance of the associated mold reaching a preselected position relative to the labeler. Thus, there is an absolute safety preventing the mold from striking the suction head 70

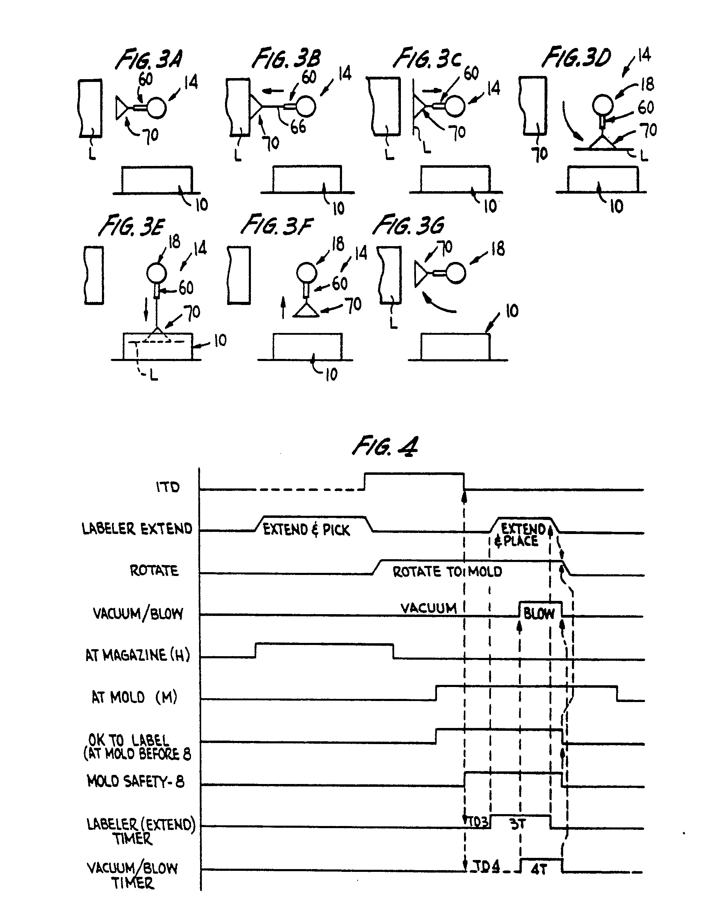

The normal at rest position of the label applicator 14 is with the suction head 70 opposing but spaced from the respective stack of labels L, as shown in Figure 3A. When actuated, the label applicator 14 has the extensible fluid motor 60 actuated to extend the cylinder rod 66 so that the suction head 70 will engage and pick up the foremost label L from the stack of labels, as shown in Figure 3B. Since the label stack is horizontal, the engagement of the foremost label L by the suction cups 72 will result in only a slight rearward movement of the stack and as soon as the suction head moves away from the label stack, as shown in Figure 3C, the remaining labels will again return to their forward positions and the picked up label L will be carried by the suction head 70. Once the extensible fluid motor 60 is fully retracted, as shown in Figure 3C, the rotary actuator 18 will become operative and will rotate the suction head 70 and the extensible fluid motor 60 through a preselected angle which, in the preferred embodiment of the invention, is 90° as shown in Figure 3D. The label L is now in position for insertion into the cavity 12 of the associated half 10.

It is to be understood that the label applicator 14 will remain in the position of Figure 3D until the associated mold half 10 reaches a prescribed position with respect to the label applicator 14 at which time the extensible fluid motor 60 will be actuated to move the suction head 70 into the related mold cavity to deposit the label L carried thereby in the mold cavity. At this time flow of the vacuum line 78 is cut off and flow to the blow line 82 is initiated so as firmly to force the label against the wall of the mold cavity 12 as shown in phantom lines in Figure 1. This condition is also shown in Figure 3E.

Immediately after the label has been deposited in the associated mold cavity, the extensible fluid motor 60 is actuated to retract the suction head 70 before the wall of the mold cavity can strike the suction head. Once the suction head 70 has been fully retracted, the rotary actuator 18 is again rendered operative and it rotates the suction head 70 in the opposite direction, a clockwise direction as shown in Figure 3G, to the starting position of Figure 3A.

There are material advantages in having the label stack in a horizontal position. This permits, among other things, a much greater size stack which requires replacement of labels less frequently. It also eliminates jamming effects normally occurring in vertical label stacks.

The use of a rotary actuator permits the extremely quick alignment of the suction head first with the label stack and then with the mold cavity. The use of the decelerator unit permits the very rapid movement of the rotary actuator while minimizing the slowing down and stopping time under controlled conditions wherein a label will not be dislodged from or shifted relative to the suction head.

Although the applicator 14 has been illustrated only in a position for applying a label to the radially inner mold half 10, it is to be understood that a like label applicator may be positioned circumferentially adjacent the illustrated label applicator for transferring other labels from another label stack in a radially outward direction to place such a label within a radially outer mold half.

It is also pointed out here that the mold halves will preferably be provided with suction means to retain placed labels in position therein.

Referring now to the air cylinder version, it will be seen that there is illustrated in Figure 5 certain of the molds of a rotatable wheel blow molding machine with the molds being restricted to those inner blow mold halves which appear between the 12:00 o'clock and the 3:00 o'clock positions and certain of the outer blow mold halves which are associated therewith. The blow molding machine, which is conventional, includes a fixed set of radially inner blow mold halves 10 which are mounted for rotation in unison about a horizontal axis. Radially outer blow mold halves are identified by the numeral 114 and while they are mounted for rotation in unison with respective inner blow mold halves 10, they are mounted in a conventional manner for radially outward movement initially to permit the removal of a previously blow molded article therefrom.

It is to be understood that the mold halves 10, 114 reach their fully opened positions at generally the 12:00 o'clock position and the previously blow molded article is immediately ejected therefrom. The circumferential extent of movement of the outer blow mold halves 114 before they must return to their radially inner positions in association with the inner blow mold halves 10 is very restricted, as is shown in Figure 5.

In operation, there is provided a continuous tubular parison 116 which is ejected from a suitable extruder head (not shown) and the outer blow mold half 114 must move from its widely radially spaced position generally at the 1:00 o'clock position to a position clampingly engaging its associated inner mold half 10 at the 3:00 o'clock position wherein a section of the tubular parison 116 is clamped between the two cooperating blow mold halves 10, 114.

In Figure 5 there has been shown a first apparatus generally identified by the numeral 118, for delivering a label into the interior of each blow mold half 10. There has also been illustrated a second label delivery apparatus 120 for delivering a label into each of the radially outer blow mold halves 114. For purposes of illustration only, there has been shown the simultaneous application of a label L to a first outer blow mold half 114 and to an inner blow mold half 10 of a next following set of molds. In actuality, the timing will be such that a label will be first placed in an inner blow mold half and then shortly thereafter into an associated outer blow mold half.

The two label applying apparatuses 118, 120 are basically of identical construction and vary only in the direction of rotation of a label from its associated magazine to an associated mold half. Accordingly, the basics of each label transfer apparatus will first be described without specific reference to Figure 5.

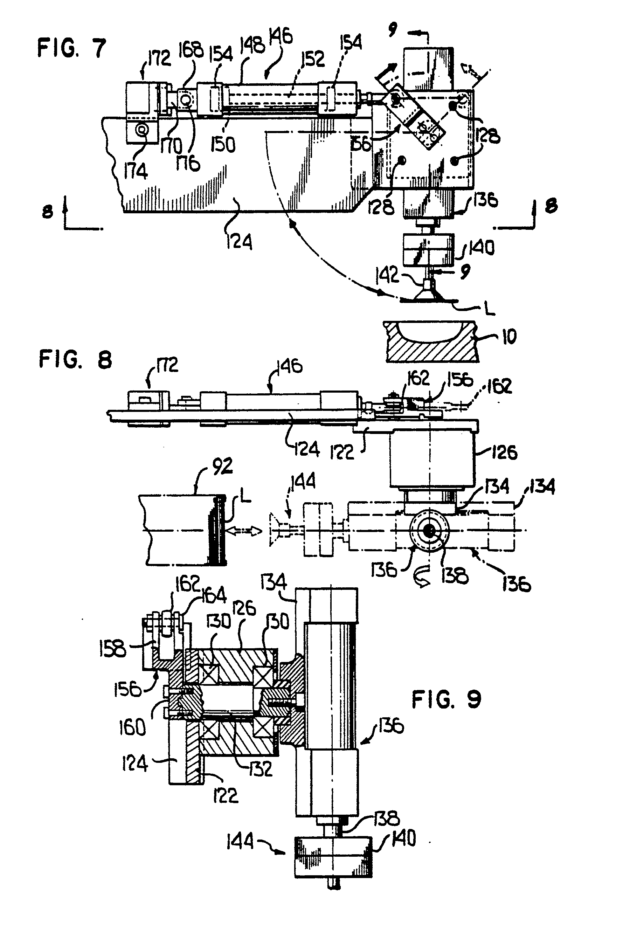

Referring now to Figure 9, it will be seen that there is illustrated a mounting plate 122 which is secured to an end portion of a support member 124. The details of the support member 124 will be described hereinafter. The mounting plate 122 is specifically constructed to receive an end of a housing 126 which is secured in place by screws 128 (Figure 7). The housing 126 is provided with bearings 130 in which there is journalled a short shaft 132. The shaft 132 is, however, of a length to pass out of opposite ends of the housing 126 and also of a length to pass through the mounting plate 122.

The shaft 132 at the end of the housing 126 remote from the mounting plate 122 carries a support fixture 134 for an extensible fluid motor 136. The extensible fluid motor is in fact a double acting air cylinder and has a projecting piston rod 138 which carries a mounting unit 140 for a plurality of suction cups 142. The mounting unit 140 and the suction cups or head 142 form a label pick-up and delivery head 144.

It is necessary that the shaft 132 be repeatedly oscillated through an arc on the order of 90° so that, as is best shown in Figure 6, the suction head 144 may be first presented to a label magazine 92 to pick up a label L and then rotated to a position aligned with a blow mold half 10 for presenting the label into the interior of the mold half.

A principal feature of this form of the invention is to provide drive means for the shaft 132 which will effect the required oscillation thereof and yet will require a minimum of space in a circumferential direction with reference to Figure 5.

With particular reference to Figures 7 and 9, it has been found that the drive means which will perform satisfactorily and yet occupy a minimum of circumferential space will be a small elongated extensible fluid motor generally identified by the numeral 146. Most particularly, it has been found that an air cylinder identified as TOM THUMB MP1 will perform satisfactorily. This air cylinder has a 19 mm (3/4 inch) bore and a 76 mm (3 inch) stroke and is provided at each end thereof with an internal shock absorber to facilitate rapid but controlled deceleration at each end of the piston stroke. The air cylinder or fluid motor 146, $0.7 \times 10^{-3}$ Pascals (100 p.s.i.) air pressure, will provide 19.96 kg (44 pounds) push and 14—97 kg (33 pounds) pull as compared to the rotary air motors 1—29 m/kg (23 inch/pound) force.

With particular reference to Figure 7, it will be seen that the fluid motor 146 includes a cylinder 148 having mounted therein for reciprocation a piston 150 which carries a piston rod 152 which projects beyond the cylinder 148 at one end thereof. Also, as previously described, the cylinder 148 has at opposite ends thereof shock absorbers 154.

There is keyed and bolted onto that end of the shaft 132 which extends through the mounting plate 122 a fitting 156. The fitting 156 is in the form of a lever arm having a bifurcated end 158 and a mounting leg 160 which is secured to the shaft 132.

The piston rod 152 is provided with an eye type fitting 162 which is received in the bifurcated end 158 and is coupled thereto by a bolt or like member 164. Further, as is shown in Figure 7, the lever arm 156 will be beneficially mounted relative to the support unit 134 so that when the extensible fluid motor 136 is vertical the lever arm 156 will be offset from the vertical in a counterclockwise direction 90°. With this positioning of the lever arm it will be seen that when the extensible fluid motor 136 opposes an associated label magazine 166 (Figure 8), the lever arm 156 will be in a position 45° in advance of the vertical in a clockwise direction. Thus, a maximum effective lever arm length is provided.

With particular reference to Figures 7 and 8, it will be seen that the mounting plate 132 overlaps and is secured by way of welding to an end portion of the generally horizontal support member 124. Further, it will be seen that the mounting plate 122 is slightly notched to provide clearance for one end of the fluid motor 146. Thus, the fluid motor 146 generally overlies the support member 124. The end of the cylinder 148 remote from the projecting piston rod 152 is provided with a bifurcated mounting fitting 168 which receives therebetween a mounting flange 170 carried by a fitting 172 which is suitably seated on and bolted to the support member 124 by means of a bolt 174. A pin or bolt 176 secures the flange 70 to the bifurcated fitting 168.

With reference to Figures 5 and 6, there is provided a mounting plate 178 which has an arcuate lower portion 180 of a size and shape to be adjustably bolted onto a frame member 182 out of the blow molding machine. The plate 178 carries on the outer face thereof, i.e. facing away from the blow molding machine, a support plate 184 which is braced by a pair of braces 186, 188.

The support plate 184 extends radially. There is a further support plate 190 which also extends radially and is separated from the support plate 184 by an adjustable mounting unit 192 which permits axial and radial adjustment of the support plate 190 relative to the support plate 184. The support member 124 may be an integral part of the support plate 190.

It will thus be seen that the label transfer apparatus 18 may be directly mounted relative to the support plate 190 on the left side thereof as viewed in Figure 5. On the other hand, to provide clearance the label transfer apparatus 120 is not only mounted to the right of the support plate 190, but is spaced therefrom utilizing an angular spacer 194 which is secured to the right face of the support plate 190, but is spaced therefrom utilizing an angular spacer 194 which is secured to the right face of the support plate 190 and, in turn, carries a separate support member 196 (Figure 6) on which a mounting plate similar to the mounting plate 222 may be secured or which may be so machined directly to receive the housing 126 of the label transfer apparatus 120 as shown in Figure 6.

The support plate 190 will carry mounting mechanisms 198 and 200 for the mounting of the label magazine 92 and a like label magazine 202 which is associated with the label transfer apparatus 120 and is best shown in Figure 6.

With reference to Figure 5, the extensible fluid cylinder 146 of the two label transfer apparatuses 118, 120 are disposed in parallel side-by-side relation although slightly radially and circumferentially offset and with a minimal clearance therebetween. This permits the label transfer apparatus 120 to be closely circumferentially adjacent the label transfer apparatus 118 for the proper timed positioning of labels in the outer mold halves 114 in cooperation with the timed positioning of labels in the inner mold halves 10.

Thus, by substituting the extensible fluid motor 146 for the rotary fluid motor 32, the space requirement has been greatly reduced in an unobvious manner, making it possible to mount the two label transfer apparatuses 118, 120 within a very restricted space, thus permitting the delivery of labels to both inner and outer mold halves of a Ferris wheel type molding machine even when those mold halves are of a relatively short length as would occur when a short bottle, such as a 16 ounce bottle, is being blow molded.

**Claims**

1. A label applicator (14) for transferring a label (L) from a generally horizontal label stack into a generally vertically opening mold (10), said label applicator comprising an extensible fluid cylinder (60) having a piston rod (66) and a label pick-up head (68) carried by said piston rod for selected projecting and retraction; characterised in that there is provided a horizontal shaft (36), support means (16) mounting said shaft for rotation about its axis, a mounting bracket (52) carried by said shaft for rotation therewith, said mounting bracket carrying said fluid cylinder (60) with said fluid cylinder having an axis generally normal to the axis of said shaft, and a motor (18) for oscillating said shaft (36) to first present said label pick-up head (68) to a label stack to pick up a label and then by rotating said shaft to then present said label pick-up head (68) to mold half (12) to position a label in said mold half.

2. A label applicator according to claim 1 wherein said motor (18) is a rotary actuator of the type which rotates through a preset arc first in one direction and then in the other to assure automatic alignment of said label pick-up head (68) first with a label stack and then with a blow mold half (12) at a predetermined place.

3. A label applicator according to claim 1 or 2 together with decelerator means (32) for controlling the rate of deceleration of said label pick-up head (68) as it approaches each of its respective positions.

4. A label applicator according to claim 1, 2 or 3 wherein said support means (16) includes a mounting bracket having two opposite faces, a support unit for said shaft (36) secured to one of said mounting bracket faces, and said motor (18) being secured to the other of said mounting bracket faces.

5. A label applicator according to claim 4 wherein said motor (18) has a projecting drive shaft (28), a coupling (38) between said shafts (28, 36), and at least one of said shafts extending into said mounting bracket (16).

6. A label applicator according to claim 3 or any of claims 4 or 5 when appendent to claim 3 wherein said decelerator means (32) are carried by said support means (16).

7. A label applicator according to claim 3 or any of claims 4 to 6 when appendent to claim 3 wherein said decelerator means (32) includes a pair of decelerator units (42) having operative faces facing in the same direction, and a double faced stop member (46) carried by said shaft (36) operable to have first one face thereof engage a respective one of said decelerator units and then the other face thereof engage the other respective decelerator unit.

8. A label applicator according to any of claims 1 to 7 together with sensor means (H, M) for determining said label pick-up head (68) being properly positioned for alignment with a label stack and with a mold path and for otherwise preventing extension of the fluid cylinder (60).

9. A label applicator according to any of claims 1 to 8 together with sensor means (88, 90) for sensing the retracted and extended position of said fluid cylinder (60), said means (90) for sensing the extended position of said fluid cylinder forming means for controlling introduction of blow air to said label pick-up head (68) when said label pick-up head is aligned with a mold (10), and said means (88) for sensing the retracted position of said fluid cylinder forming means for preventing actuation of said motor except when said fluid cylinder is retracted.

10. A label applicator according to any of claims 1 to 9 wherein said mold (10) is part of a rotating wheel type blow molding machine having a frame, said support means (16) including a support member (124) having means for attachment to said frame, and said motor being drive means in the form of a second extensible fluid motor (146), said second extensible fluid motor including a cylinder (148) and a piston (150) carrying a piston rod (152), mounting means (168) mounting an end of said cylinder remote from said piston rod to said support member (124), a lever arm (156) on said shaft (132) one end, and means (162) connecting said piston rod to said lever arm.

11. A label applicator according to claim 10 wherein the diameter and stroke of said second extensible fluid motor (146) taken in combination with the usable fluid pressure and the effective length of said lever arm (156) provide the required force to oscillate said shaft (132) while occupying a minimum of space circumferentially of said blow molding machine.

12. A label applicator according to claim 10 or 11 wherein there are two said apparatus, one each for two mold halves (12) of a single mold (10) wherein said mold halves open in a radial direction and said mold halves include an inner mold half (10) and an outer mold half (114), said apparatus being arranged in back-to-back relation with said drive means (146) being in substantially interfering relation, and the permissible small cross section of said second extensible fluid motor forming clearance means.

13. A label applicator according to claim 12 wherein both of said apparatus are carried by said support member (124).

14. A label applicator according to claim 13 wherein both of said drive means (146) are disposed on the same side of said support member (124).

15. A label applicator according to any of claims 10 to 14 wherein said second extensible fluid motors (146) are disposed in parallel relation.

16. A label applicator according to any of claims 10 to 15 wherein said support member (124) has offset to one side thereof on the side facing said housing a mounting plate (122) for said housing, said support members lying in a general plane, said lever arm (156) in part lying in said general plane, and said second extensible fluid motor (146) generally overlying said support member.

**Patentansprüche**

1. Eiketten-Einlegevorrichtung (14) zum Überbringen eines Etiketts (L) von einem im wesentlichen horizontalen Etikettenstapel in eine im wesentlichen sich vertikal öffnende Form (10), wobei die Etiketten-Einlegevorrichtung einen ausfahrbaren Fluidzylinder (60) enthält, der eine Kolbenstange (66) und einen Etiketten-Aufnahmekopf (68) aufweist, der zum ausgewählten Vorschieben und Zurückziehen von der Kolbenstange getragen wird, dadurch gekennzeichnet, daß eine horizontale Welle (36), Trägermittel (16), die die Welle um ihre Achse drehbar halten, einen Befestigungsarm (52), der von der Welle und mit dieser drehbar gehalten ist, wobei der Befestigungsarm (52) den Fluidzylinder (60) trägt, wobei der Fluidzylinder eine Achse aufweist, die im wesentlichen senkrecht zur Wellenachse verläuft, und ein Antrieb (18) vorgesehen sind, der die Welle (36) hin- und herschwenkt, um den Etiketten-Aufnahmekopf (68) zunächst an einen Etikettenstapel anzustellen, damit ein Etikett aufgenommen werden kann, und um anschließend durch Drehen der Welle den Etiketten-Aufnahmekopf (68) an die Formhälfte (12) anzustellen, damit ein Etikett in die Formhälfte eingebracht werden kann.

2. Etiketten-Einlegevorrichtung nach Anspruch 1, wobei der Antrieb (18) ein Drehantrieb des Typs ist, der sich um einen festgelegten Kreisbogen zunächst in eine Richtung, und dann in die andere dreht, damit ein automatisches Ausrichten des Etikettenaufnahmekopfs (68) zuerst mit einem Etikettenstapel und dann mit einer Blasformhälfte (12) an einer vorbestimmten Stelle sichergestellt ist.

3. Etiketten-Einlegevorrichtung nach Anspruch 1 oder 2, mit Verzögerungsmitteln (32) zum Steuern der Verzögerungsgeschwindigkeit des Etikettenaufnahmekopfes (68), falls sich dieser seinen entsprechenden Stellungen nähert.

4. Etiketten-Einlegevorrichtung nach Anspruch 1, 2 oder 3, bei der die Trägermittel (16) einen Befestigungsarm mit zwei gegenüberliegenden Seiten, sowie eine an einer der beiden Befestigungsarmseiten angebrachte Trägereinheit für die Welle (36) aufweisen, und bei der der Antrieb (18) auf der anderen Befestigungsarmseite angebracht ist.

5. Etiketten-Einlegevorrichtung nach Anspruch 4, bei der der Antrieb (18) eine vorstehende Antriebswelle (28) aufweist, bei der ein Keilschloß (38) zwischen den Wellen (28, 36) vorgesehen ist, und bei der sich zumindest eine der Wellen in den Befestigungsarm (16) hinein erstreckt.

6. Etiketten-Einlegevorrichtung nach Anspruch 3 oder einem der Ansprüche 4 oder 5, falls abhängig von Anspruch 3, bei der die Verzögerungsmittel (32) durch die Trägermittel (16) gehalten werden.

7. Etiketten-Einlegevorrichtung nach Anspruch 3 oder einem der Ansprüche 4 bis 6, falls abhängig von Anspruch 3, bei der die Verzögerungsmittel (32) ein Paar an Verzögerungseinheiten (42) mit in dieselbe Richtung weisenden Arbeitsflächen und ein mit zwei Flächen versehenes Bremsteil (46) aufweisen, das durch die Welle (36) getragen ist, und das derart wirkt, daß zunächst eine Fläche desselben mit einer entsprechenden der Verzögerungseinheit in Eingriff steht und dann die andere Fläche mit der anderen entsprechenden Verzögerungseinheit in Eingriff steht.

8. Etiketten-Einlegevorrichtung nach einem der Ansprüche 1 bis 7, bei der Sensormittel (H, M) vorgesehen sind, um zu bestimmen, ob sich der Etikettenaufnahmekopf (68) passend in Stellung zur Ausrichtung mit einem Etikettenstapel und mit einem Weg der Form befindet, und um andernfalls ein Ausdehnen des Fluidzylinders (60) zu verhindern.

9. Etiketten-Einlegevorrichtung nach einem der Ansprüche 1 bis 8, mit Sensormittel (88, 90), um die zurückgezogene und ausgefahrene Stellung des Fluidzylinders (60) zu erfassen, wobei die Mittel (90), die die ausgefahrene Stellung des Fluidzylinders feststellen, Mittel zur Steuerung des Einführens von Druckluft in den Etikettenaufnahmekopf (68) bilden, falls der Etikettenaufnahmekopf mit einer Form (10) ausgerichtet ist, und die Mittel (88) zum Erfassen der zurückgezogenen Stellung des Fluidzylinders, Mittel zum Verhindern des Arbeitens des Antriebs, außer wenn der Fluidzylinder zurückgezogen ist, darstellen.

10. Etiketten-Einlegevorrichtung nach einem der Ansprüche 1 bis 9, bei der die Form (10) Teil einer Blasformmaschine des Drehscheibentyps ist, die einen Rahmen aufweist, wobei die Trägermittel (16) ein Trägerteil (124) einschließen, das Mittel zum Anbringen an den Rahmen aufweist, und wobei der Antrieb Antriebsmittel in Form eines zweiten, ausdehnbaren Fluidantriebs (146) darstellt, wobei der zweite ausdehnbare Fluidantrieb einen Zylinder (148) und einen Kolben (150), der eine Kolbenstange (152) trägt, aufweist, wobei Befestigungsmittel (168) vorgesehen sind, die ein Ende des Zylinders, das abgewandt von der Kolbenstange ist, an das Trägerteil (124) befestigen, wobei ein Hebelarm (156) an einem Ende der Welle (132) und Mittel (162) zum Verbinden der Kolbenstange mit den Hebelarm vorgesehen sind.

11. Etiketten-Einlegevorrichtung nach Anspruch 10, bei der der Durchmesser und Hub des zweiten ausdehnbaren Fluidantriebs (146) in Zusammenhang mit den anwendbaren Fluiddruck und der effektiven Länge des Hebelarms (156) die notwendige Kraft schaffen, um die Welle (132) zu verschwenken, wobei ein Minimum an umfänglichem Raum der Blasformmaschine belegt wird.

12. Etiketten-Einlegevorrichtung nach Anspruch 10 oder 11, bie der zwei Apparate vorgesehen sind, und zwar jeweils einer für zwei Hälften (12) einer einzigen Form (10), wobei die Formhälften in einer radialen Richtung öffnen und die Formhälften eine innere Formhälfte (10) und eine äußere Formhälfte (114) aufweisen, wobei der Apparat in einer Rücken-zu-Rücken-Anordnung mit den Antriebsmitteln (146), die sich im wesentlichen überlagern, angeordnet ist, und der mögliche schmale Querschnitt des zweiten ausdehnbaren Fluidantriebs Abstandsmittel bildet.

13. Etiketten-Einlegevorrichtung nach Anspruch 12, wobei beide Apparate vom Trägerteil (124) getragen werden.

14. Etiketten-Einlegevorrichtung nach Anspruch 13, wobei beide Antriebsmittel (146) auf derselben Seite des Trägerteils (124) angeordnet sind.

15. Etiketten-Einlegevorrichtung nach einem der Ansprüche 10 bis 14, bei der die zweiten ausdehnbaren Fluidantriebe (146) in parallelem Verhältnis angeordnet sind.

16. Etiketten-Einlegevorrichtung nach einem der Ansprüche 10 bis 15, bei der das Trägerteil (124) auf der Seite, die dem Gehäuse zugewandt ist, seitlich versetzt eine Befestigungsplatte (122) für das Gehäuse aufweist, wobei das Trägerteil in einer Hauptebene liegt, der Hebelarm (156) teilweise in der Hauptebene liegt, und der zweite ausdehnbare Fluidantrieb (146) im wesentlichen über dem Trägerteil liegt.

**Revendications**

1. Dispositif d'étiquetage (14) destiné à transférer une étiquette (L) depuis une pile d'étiquettes généralement horizontale dans un moule (10) qui s'ouvre généralement dans le sens vertical, ce dispositif comprenant un vérin à fluide extensible (60) comportant une tige de piston (66) et une tête de saisie d'étiquette (68) supportée par la tige de piston en vue d'une extension et d'un retrait sélectifs, caractérisé en ce qu'il comporte un arbre horizontal (36), un dispositif de support (16) montant l'arbre de façon qu'il puisse tourner autour de son axe, une console de montage (52) supportée par l'arbre afin de tourner avec lui, la console de montage portant le vérin à fluide (60) qui présente un axe généralement perpendiculaire à l'axe de l'arbre, et un moteur (18) pour faire osciller l'arbre (36) en vue de présenter tout d'abord la tête de saisie d'étiquette (68) à une pile d'étiquettes afin de saisir une étiquette puis, par rotation de l'arbre, de présenter ensuite la tête de saisie d'étiquette (68) à une moitié de moule (12) pour positionner une étiquette dans celle-ci.

2. Dispositif d'étiquetage suivant la revendication 1, dans lequel le moteur (18) est un actionneur rotatif du type qui tourne suivant un arc préréglé, dans un sens puis dans l'autre, pour assurer l'alignement automatique de la tête de saisie d'étiquette (68), tout d'abord avec une pile d'étiquettes, puis avec une moitié de moule de soufflage (12) à un endroit prédéterminé.

3. Dispositif d'étiquetage suivant la revendication 1 ou 2, associé à des moyens de décélération (32) pour régir le taux de décélération de la tête de saisie d'étiquette (68) lorsqu'elle s'approche de chacune de ses positions respectives.

4. Dispositif d'étiquetage suivant la revendication 1, 2 ou 3, dans lequel le dispositif de support (16) comprend une console de montage comportant deux faces opposées, un élément de support pour l'arbre (36) étant fixé à une des faces de la console de montage et le moteur (18) étant fixé à l'autre face de cette console.

5. Dispositif d'étiquetage suivant la revendication 4, dans lequel le moteur (18) comporte un arbre d'entraînement saillant (28), un accouplement (38) entre les arbres (28, 36), un des arbres au moins s'étendant dans la console de montage (16).

6. Dispositif d'éiquetage suivant la revendication 3 ou l'une ou l'autre des revendications 4 et 5 découlant de la revendication 3, dans lequel les moyens de décélération (32) sont supportées par le dispositif de support (16).

7. Dispositif d'étéquetage suivant la revendication 3 ou l'une ou l'autre des revendications 4 et 6 découlant de la revendication 3, dans lequel les moyens de décélération (32) comprennent deux éléments de décélération (42) comportant des faces actives orientées dans le même sens et un élément d'arrêt à double face (46) supporté par l'arbre (36) et propre à intervenir de manière que l'une de ses faces attaque tout d'abord un des éléments de décélération, puis que son autre face attaque l'autre élément de décélération.

8. Dispositif d'étiquetage suivant l'une quelconque des revendications 1 à 7 associé à des dispositifs détecteurs (H, M) pour déterminer le positionnement correct de la tête de saisie d'étiquette (68) en vue d'un alignement avec une pile d'étiquettes et avec un trajet de moule et pour empêcher sinon l'extension du vérin à fluide (60).

9. Dispositif d'étiquetage suivant l'une quelconque des revendications 1 à 8 associé à des dispositifs détecteurs (88, 90) pour détecter les positions rétractée et étendue du véin à fluide (60), le dispositif (90) destiné à détecter la position étendue du vérin à fluide formant un dispositif pour commander l'introduction d'air de soufflage dans la tête de saisie d'étiquette (68) lorsque cette tête est en ligne avec un moule (10) et le dispositif (88) destiné à détecter la position rétractée du vérin à fluide formant un dispositif pour empêcher l'actionnement du moteur sauf lorsque le vérin à fluide est rétracté.

10. Dispositif d'étiquetage suivant l'une quelconque des revendications 1 à 9, dans lequel le moule (10) fait partie d'une machine de moulage par soufflage du type à roue tournante comportant un bâti, le dispositif de support (16) comprenant un élément de support (124) comportant des moyens de fixation au bâti et le moteur étant un dispositif d'entraînement ayant la forme d'un second moteur à fluide extensible (146), le second moteur à fluide extensible comprenant un cylindre (148) et un piston (150) portant une tige de piston (152), un moyen de montage (168) montant une extrémité du cylindre éloignée de la tige de piston sur l'élément de support (124), un bras de levier (156) sur l'arbre (132) à une extrémité et un moyen (162) reliant la tige de piston au bras de levier.

11. Dispositif d'étiquetage suivant la revendication 10, dans lequel le diamètre et la course du second moteur à fluide extensible (146), en combinaison avec la pression de fluide utilisable et avec la longueur effective du bras de levier (156), fournissent la force requise pour faire osciller l'arbre (132) tout en occupant un minimum de place dans le sens circonférentiel de la machine de moulage par soufflage.

12. Dispositif d'étiquetage suivant la revendication 10 ou 11, dans lequel sont prévus deux appareils, destinés à chacune de deux moitiés de moule (12) d'un moule unique (10), les moitiés de moule s'ouvrant dans un sens radial et comprenant une moitié de moule intérieure (10) et une moitié de moule extérieure (114), les appareils étant disposés dos à dos avec les dispositifs d'entraînement (146) en substance dans le chemin l'un de l'autre, la petite section admissible du second moteur à fluide extensible fournissant de l'aisance.

13. Dispositif d'étiquetage suivant la revendication 12, dans lequel les deux appareils sont supportées par l'élément de support (124).

14. Dispositif d'étiquetage suivant la revendication 13, dans lequel les deux dispositifs d'entraînement (146) sont disposés du même côté de l'élément de support (124).

15. Dispositif d'étiquetage suivant l'une quelconque des revendications 10 à 14, dans lequel les seconds moteurs à fluide extensible (146) sont disposés parallèlement.

16. Dispositif d'étiquetage suivant l'une quelconque des revendications 10 à 15, dans lequel l'élément de support (124) comporte, décalé d'un de ses côtés, du côté faisant face au boîtier, un plateau de montage (122) pour ce boîtier, les éléments de support étant disposés dans un plan général, le bras de levier (156) se trouvant en partie dans ce plan général et le second moteur à fluide extensible (146) surplombant généralement l'élément de support.

FIG. 1

VACUUM LINE

BLOW LINE

FIG. 2

*FIG. 3A*

*FIG. 3B*

*FIG. 3c*

*FIG. 3D*

*FIG. 3E*

*FIG. 3F*

*FIG. 3G*

*FIG. 4*

| | |
|---|---|
| ITD | |
| LABELER EXTEND | EXTEND & PICK / EXTEND & PLACE |
| ROTATE | ROTATE TO MOLD |
| VACUUM/BLOW | VACUUM / BLOW |
| AT MAGAZINE (H) | |
| AT MOLD (M) | |
| OK TO LABEL (AT MOLD BEFORE 8 | |
| MOLD SAFETY-8 | |
| LABELER (EXTEND) TIMER | TD3 3T |
| VACUUM/BLOW TIMER | TD4 4T |

FIG. 6

FIG. 5

4

0 137 588

FIG. 7

FIG. 8

FIG. 9

5